# EUROPÄISCHE PATENTSCHRIFT

(11) **EP 0 411 338 B1**
(45) Veröffentlichungstag und Bekanntmachung des Hinweises auf die Patenterteilung: **04.01.1995**
(21) Anmeldenummer: 90112866.0
(22) Anmeldetag: 05.07.1990
(51) Int. Cl.: F16L 55/162

(54) **Vorrichtung zur Durchführung von Ausbesserungsarbeiten an einer schadhaft gewordenen, nicht begehbaren Rohrleitung**
Device for carrying out improvement work on a damaged pipeline which is no longer accessible
Dispositif pour la mise en oeuvre de travaux de réparation d'un conduit non accessible défectueux

(30) Priorität: 14.07.1989 DE 3923347
(43) Veröffentlichungstag der Anmeldung: 06.02.1991
(73) Patentinhaber: KA-TE System AG, CH-8041 Zürich (CH)
(72) Erfinder: Himmler, Erich, CH-8041 Zürich (CH)
(74) Vertreter: Gossel, Hans K., Dipl.-Ing.

(56) Entgegenhaltungen:
- EP-A- 0 085 504
- WO-A-86/03818
- DE-U- 8 628 587
- US-A- 4 197 908

## Beschreibung

Die Erfindung betrifft eine Vorrichtung zur Durchführung von Ausbesserungsarbeiten an einer schadhaft gewordenen, nicht begehbaren Rohrleitung nach dem Oberbegriff des Patentanspruchs 1.

Eine roboterähnliche Vorrichtung dieser Art ist aus der Internationalen Patentveröffentlichung WO 86/03 818 (PCT/CH84/00197) bekannt. Mit dieser bekannten, roboterähnlichen Vorrichtung lassen sich derzeit Kanäle von 250 bis 600 mm Durchmesser sanieren. Zu einer Sanierungseinheit gehören mindestens eine roboterähnliche Fräsvorrichtung und eine roboterähnliche Spachtelvorrichtung, wie sie beispielsweise aus EP-B-0 211 825 bekannt ist. Diese werden in einen Einstiegsschacht eingeführt und von einer Bedienungsperson von einem Spezialfahrzeug aus mittels einer Fernsehkamera über einen Monitor ferngesteuert und überwacht. Die zu sanierenden Kanäle werden zuerst gespült und vorstehende Einläufe, Kalkablagerungen und Wurzeleinwüchse werden mit einem Fräsroboter mit einem Diamantfräser oder mit einem mit Hartmetall besetzten Fräser abgefräst. In einem nächsten Arbeitsgang werden sämtliche Risse und undichte Muffen auf eine Tiefe von beispielsweise 2 bis 3 cm aufgefräst und anschließend beispielsweise mit einem Zwei-Komponenten-Epoxidharz-Kleber verklebt. Mit dem Spachtelroboter wird der Zwei-Komponenten-Epoxidharz-Kleber in undichte Muffen, Risse und defekte Rohrstellen gepreßt und mit einer Gummispachtel ausgeglättet. Damit ist sowohl die Dichtigkeit als auch die Stabilität des Kanalrohrs wiederhergestellt.

In den zu sanierenden Kanälen und Rohrleitungen können sich aufgrund eingeleiteter Öle und Chemieabfälle, aufgrund eingeleiteten Benzins und anderer brennbarer Flüssigkeiten und auch auf grund vorhandener Sumpfgase explosive Gemische bilden, die durch von den roboterähnlichen Vorrichtungen verursachten Funken entzündet werden können.

Aus US-A-4,197,908 ist eine Vorrichtung der eingangs angegebenen Art bekannt, bei der der Fräser durch eine Düse mit einem inerten Gas angeblasen wird, so daß sich während des Betriebes bildende Funken gelöscht werden. Nur durch das Anblasen des Funken sprühenden Werkzeugs mit einem inerten Gas kann jedoch nicht verhindert werden, daß sich ein explosives Gemisch ausgebildet, das durch nicht gelöschte Funken entzündet werden kann.

Aufgabe der Erfindung ist es daher, eine explosionssichere, roboterartige Vorrichtung der eingangs angegebenen Art zu schaffen.

Erfindungsgemäß wird diese Aufgabe bei einer Vorrichtung der gattungsgemäßen Art durch die kennzeichnenden Merkmale des Patentanspruchs 1 gelöst. Bei der erfindungsgemäßen Vorrichtung ist somit sichergestellt, daß die Funken verursachenden Werkzeuge und insbesondere Fräswerkzeuge in einer geschlossenen Kammer mit einer inerten Atmosphäre arbeiten, so daß sich in der Kammer keine explosiven Gemische bilden können, die durch die unvermeidbaren Funken gezündet werden können. Da das Werkzeug bzw. der dieses tragende Schaft zusätzlich von einem ringförmigen Düsenspalt umgeben ist, aus dem ein den inerten Gasstrahl einhüllender Wasserschleier ejizierbar ist, bildet dieser Wasserschleier gleichsam eine dichtende Manschette für das Werkzeug. Der Schleier wird derart ejiziert, daß er sich nicht in Tröpfchen auflöst.

Aus DE-U-8 628 587 ist eine Schweißvorrichtung und speziell eine Vorrichtung zur Gasbeflutung von zwei miteinander zu verschweißenden Rohren bekannt, die während des Schweißvorganges in ihrem Innern im Bereich der auszuführenden Schweißnaht mit einer Schutzgas-Atmosphäre versehen werden sollen, um das Verzundern der Schweißnaht und der Übergangszonen zu verhindern.

Das inerte Gas, vorzugsweise Stickstoff, wird beispielsweise mit einem Eingangsdruck von 10 bar in die Leitungen eingeblasen und tritt aufgrund von Reibungsverlusten mit einem Überdruck von etwa 2 bar aus den Düsen an den Robotern aus. Die zugeführte Stickstoffmenge kann beispielsweise 10 m³/h betragen, so daß im Arbeitsbereich ein ständiger Austausch der Atmosphäre stattfindet und sichergestellt ist, daß eine inerte Schutzgasatmosphäre im Bereich der Arbeitswerkzeuge vorhanden ist.

Das inerte Gas tritt aus den Ringspalten aus, die sich zwischen den Dichtscheiben oder dichtenden Manschetten und den diese umgebenden Kanalwandungen bilden, so daß etwa außerhalb der Dichtscheiben vorhandene, explosive Gemische nicht in die durch diese abgeteilte Arbeitskammer eindringen können.

Es ist vorgesehen, daß das Werkzeug und der dieses tragende Schaft mit einer zentralen Bohrung versehen sind, die durch eine sogenannte "Drehdurchführung" mit einer ein inertes Gas, wie beispielsweise Stickstoff, zuführenden Leitung in Verbindung steht. Das inerte Gas weitet den manschettenartigen Wasserschleier nach oben hin trompetenförmig auf, was aber unschädlich ist.

Innerhalb der schützenden Manschetten reißt der Wasserschleier nicht ab, da er durch mit gleichmäßiger Strömung austretendes Wasser gebildet wird. Der so gebildete Wasserschleier ist transparent, so daß mittels einer Fernsehkamera das Fräsen durch den Schleier hindurch beobachtet werden kann.

Der Wasserschleier kühlt zusätzlich den Fräskopf und schützt ihn vor einer Überhitzung. Weiterhin löscht der Wasserschleier eine von dem Fräser ausgehende Funkenstrecke und kühlt diese ab.

Durch die erfindungsgemäße Vorrichtung ist somit sichergestellt, daß die Arbeitswerkzeuge unter einer inerten Schutzgasatmosphäre arbeiten, so daß etwa in dem Kanal oder der Rohrleitung vorhandene, explosive Gemische nicht gezündet werden können.

Ein Ausführungsbeispiel der Erfindung wird nachstehend anhand der Zeichnung näher erläutert. Diese zeigt einen in einer Rohrleitung befindlichen Fräsroboter in schematischer Seitenansicht.

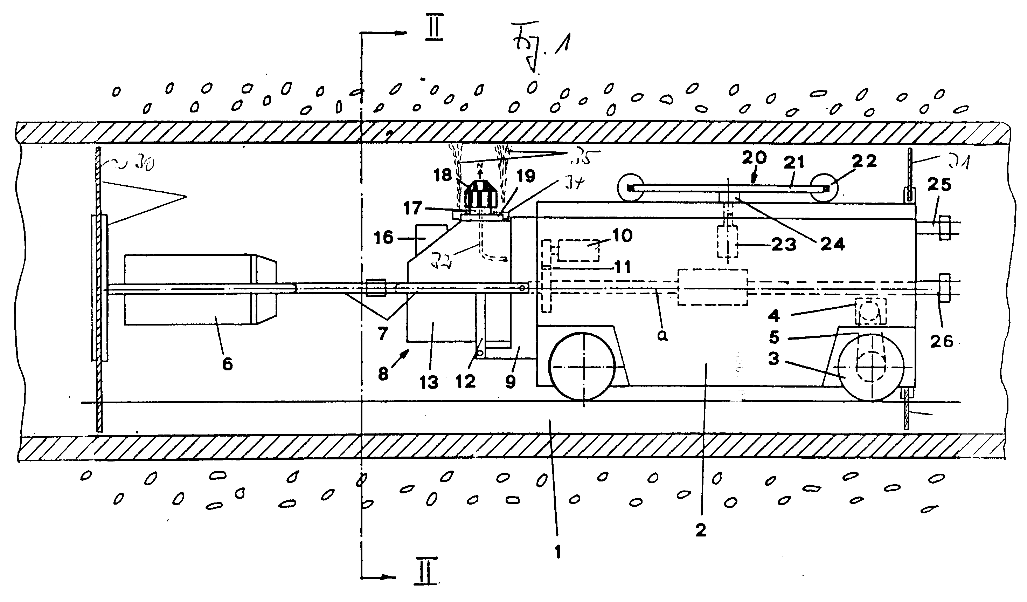

Der in Fig. 1 dargestellte Fräsroboter entspricht dem in der Fig.1 der internationalen Patentveröffentlichung WO 86/03 818 dargestellten Fräsroboter, so daß auf diese zur näheren Beschreibung des Fräsroboters Bezug genommen wird.

Die Abwandlung des bekannten Fräsroboters besteht darin, daß auf der Halterung 7 vor der Fernsehkamera 6 und dem hinteren Bereich des Wagens 2 Scheiben 30,31 aus elastomerem Material befestigt sind, deren kreisrunden Umfangsränder an den inneren Wandungen des Kanals im wesentlichen anliegen.

Der Fräskopf 18 und der diesen tragende Schaft 17 sind mit einer Bohrung versehen, die über nicht dargestellte Leitungen und eine sogenannte Drehdurchführung mit einer Stickstoff zuführenden Leitung 32 in Verbindung steht. Der Fräskopf 18 bzw. der Montageflansch 19 ist an dem rotierenden Kopf mit einem Ring 34 umgeben, der mit einem ringförmigen Düsenspalt versehen ist, aus dem der geschlossene manschettenartige Wasserschleier 35 austritt, der auf die Wandung der Rohrleitung 1 gerichtet ist.

## Patentansprüche

1. Vorrichtung zur Durchführung von Ausbesserungsarbeiten an einer schadhaft gewordenen, nicht begehbaren Rohrleitung, bestehend aus einem ferngesteuerten Wagen (2) mit einem um eine Längsachse des Wagens (2) rotierenden Werkzeug, vorzugsweise einem Fräser (18) oder einem Bohrer, und mit von dem Wagen (2) mitgeschleppten Versorgungsleitungen,
**dadurch gekennzeichnet,**
daß beidseits des Werkzeugs (18) an dem Wagen (2) Dichtscheiben (30, 31)aus elastomerem Material angeordnet sind, deren Ränder an den Rohrwandungen anliegen und die eine Kammer begrenzen,
daß der Wagen (2) innerhalb der Kammer mit einer Düse versehen ist, die durch einen von dem Wagen (2) mitgeschleppten Schlauch mit einem inerten Gas, wie beispielsweise Stickstoff, gespeist wird,
daß das Werkzeug (18) bzw. der dieses tragende Schaft (17) mit einer zentralen Bohrung versehen ist, die durch eine sogenannte "Drehdurchführung" mit einer ein inertes Gas, wie beispielsweise Stickstoff, zuführenden Leitung in Verbindung steht, und
daß der Schaft bzw. das Werkzeug (18) von einem ringförmigen Düsenspalt umgeben ist, aus dem ein den inerten Gasstrahl einhüllender Wasserschleier (35) ejizierbar ist.

## Claims

1. Apparatus for carrying out repair work on a damaged, non-walk-in pipeline, consisting of a remote-controlled carriage (2) having a tool rotating about a longitudinal axis of the carriage (2), preferably a milling cutter (18) or a drill, and having supply lines pulled along by the carriage (2), characterized:
in that on the carriage (2), on both sides of the tool (18), sealing rings (30, 31) of elastomeric material are arranged whose edges lie against the pipeline walls and which delimit a chamber;
in that the carriage (2) is provided inside the chamber with a nozzle which is fed by a hose pulled along by the carriage (2) with an inert gas, such as for example nitrogen;
in that the tool (18) and the shank (17) carrying it are provided with a central bore which via a so-called "rotary leadthrough" is in communication with a pipe supplying an inert gas, such as for example nitrogen; and in that the shank and the tool (18) are surrounded by an annular nozzle gap from which a curtain of water (35) enveloping the inert gas jet can be ejected.

## Revendications

1. Dispositif pour la mise en oeuvre de travaux de réparation d'un conduit non accessible défectueux, comprenant un chariot (2) commandé à distance avec un outil tournant autour de l'axe longitudinal du chariot (2), de préférence une fraise (18) ou un foret, et des conduits d'alimentation entraînés par le chariot (2),
caractérisé
en ce que sont disposés des deux côtés de l'outil (18) au chariot (2) des disques d'étanchéité (30, 31) en une matière élastomère dont les bords s'appliquent aux parois du conduit et qui délimitent une enceinte,
en ce que le charoit (2) est pourvu à l'intérieur de l'enceinte d'une buse qui est alimentée par un tuyau souple entraîné par le chariot (2) en un gaz inerte, comme par exemple l'azote,
en ce que l'outil (18) et la tige (17) supportant celui-ci sont pourvus d'un perçage central qui est en liaison par un soi-disant "passage tournant" avec un conduit d'amenée de gaz inerte, comme par exemple l'azote, et
en ce que la tige et l'outil (18), respectivement, sont entourés par une fente de buse annulaire par laquelle peut être éjecté un rideau d'eau pulvérisée (35) enveloppant le jet gazeux inerte.
